# EUROPÄISCHE PATENTSCHRIFT

(11) **EP 0 563 816 B1**
(45) Veröffentlichungstag und Bekanntmachung des Hinweises auf die Patenterteilung: **03.07.1996**
(21) Anmeldenummer: 93105013.2
(22) Anmeldetag: 26.03.1993
(51) Int. Cl.: A62D 3/00, B01D 53/34

(54) **Verfahren zur Entsorgung von Halonen oder halonhaltigen Fluorkohlenwasserstoffen oder Fluorchlorkohlenwasserstoffen**
Process for the disposal of halons or halons containing fluorohydrocarbons or fluorochlorohydrocarbons
Procédé pour l'élimination des halons ou des halons contenant des fluorhydrocarbures ou fluorochlorohydrocarbures

(30) Priorität: 28.03.1992 DE 4210223
(43) Veröffentlichungstag der Anmeldung: 06.10.1993
(73) Patentinhaber: HOECHST AKTIENGESELLSCHAFT, D-65926 Frankfurt am Main (DE)
(72) Erfinder: Jansen, Rolf-Michael, Dr., W-6233 Kelkheim (DE); Hug, Siegismut, Dr., W-6200 Wiesbaden (DE); Deger, Hans-Matthias, Dr., W-6238 Hofheim/Ts. (DE)

(56) Entgegenhaltungen:
- EP-A- 0 178 001
- EP-A- 0 432 323
- WO-A-79/00835
- GB-A- 1 156 560
- US-A- 4 982 039

## Beschreibung

Die Erfindung betrifft ein Verfahren zur Entsorgung von Fluorbromkohlenwasserstoffen oder Fluorchlorbromkohlenwasserstoffen (im folgenden Halone genannt) oder deren Gemischen mit Fluorkohlenwasserstoffen (FKW) oder Fluorchlorkohlenwasserstoffen (FCKW).

Der Erfindung liegt die Aufgabe zugrunde, Halone zu entsorgen und dabei gleichzeitig wiederverwertbare Produkte, wie verkaufsfähige Fluß- und Salzsäure sowie elementares Brom oder eine konzentrierte bromhaltige Salzsole zu erhalten. Obwohl bei den Produzenten von halonhaltigen Feuerlöschmitteln ein Entsorgungsnotstand entstanden ist, ist bisher noch kein Verfahren bekannt, das diesen Forderungen gerecht wird, und das Problem löst, die z.B. bei einer thermischen Spaltung von Halonen entstehenden extrem korrosiven Produkte voneinander abzutrennen.

Es wurde nun überraschenderweise gefunden, daß die obige Aufgabe dadurch gelöst wird, daß man Halone oder halonhaltige FKW oder halonhaltige FCKW beispielsweise mittels einer Knallgasflamme thermisch spaltet, den dabei gebildeten Gasstrom abkühlt, den bei der Spaltung entstandenen Bromwasserstoff durch Einspeisung von überschüssigem elementarem Chlor in den Gasstrom zu Brom oxidiert, das entstandene HF bzw. HCl aus dem Gasstrom unter Gewinnung von Fluorwasserstoffsäure bzw. Salzsäure absorbiert und schließlich elementares Brom und Chlor destillativ voneinander trennt oder beide zu den Salzen reduziert

Ein Gegenstand der Erfindung ist demgemäß ein Verfahren zur Entsorgung von Halonen (Fluorbromkohlenwasserstoffen oder Fluorchlorbromkohlenwasserstoffen) oder deren Gemischen mit Fluorkohlenwasserstoffen (FKW) oder Fluorchlorkohlenwasserstoffen (FCKW), dadurch gekennzeichnet, daß man
a) die Halone oder deren Gemische mit FKW oder FCKW in Gegenwart einer Wasserstoffquelle thermisch oder photochemisch spaltet
b) das in Schritt a) entstandene und HF und HBr enthaltende Gas auf 5 - 50°C abkühlt und mit mindestens 1 Mol Cl₂ pro Mol HBr umsetzt
c) aus dem in Schritt b) entstandenen und HF, HCl, Br₂ und überschüssiges Cl₂ enthaltenden Gas das HF in einer Absorptionskolonne mit Wasser oder Salzsäure auswäscht, wobei am Sumpf der Kolonne Fluorwasserstoffsäure und am Kopf der Kolonne ein weitgehend HF-freies, HCl, Br₂ und Cl₂ enthaltendes Gas erhalten wird
d) die in Schritt c) entstandene Fluorwasserstoffsäure in einer Stripkolonne mit komprimierter Luft oder Dampf von mitgeführtem Brom befreit und dann am Sumpf der Kolonne abführt, während man Brom im Gemisch mit Luft oder Dampf am Kolonnenkopf abzieht
e) aus dem in Schritt c) entstandenen weitgehend HF-freien Gas das darin enthaltene HCl in einer Absorptionskolonne mit Wasser auswäscht, wobei am Sumpf der Kolonne Salzsäure und am Kopf der Kolonne ein weitgehend HCl-freies, Br₂ und Cl₂ enthaltendes Gas erhalten wird
f) die in Schritt e) entstandene Salzsäure in einer Stripkolonne mit komprimierter Luft oder Dampf von mitgeführtem Brom befreit und dann die Salzsäure am Sumpf der Kolonne abführt, während man Brom im Gemisch mit Luft oder Dampf am Kolonnenkopf abzieht
g) die in den Schritten d) - f) am jeweiligen Kolonnenkopf abgezogenen, Brom oder Brom und Chlor enthaltenden Gase gemeinsam komprimiert und dadurch teilweise kondensiert
h) das in Schritt g) entstandene kondensierte Br₂/Cl₂-Gemisch in einer Kolonne destilliert, wobei das Cl₂ am Kopf der Kolonne und das Br₂ am Sumpf der Kolonne abgezogen wird
i) den in Schritt g) nicht kondensierten Teil der Gase, der restliches Brom und Chlor enthält, einer reduzierenden Wäsche unterwirft.

Man kann aber, statt einen Teil des Broms und des überschüssigen Chlors teilweise zu kondensieren und diesen Teil destillativ zu trennen, das gesamte Brom und Chlor, das in den Gasen enthalten ist, die in den Schritten d) - f) am jeweiligen Kolonnenkopf abgezogen werden, durch eine reduzierende Wäsche in Bromide bzw. Chloride überführen.

Ein weiterer Gegenstand der Erfindung ist daher ein Verfahren zur Entsorgung von Halonen (Fluorbromkohlenwasserstoffen oder Fluorchlorbromkohlenwasserstoffen) oder deren Gemischen mit Fluorkohlenwasserstoffen oder Fluorchlorkohlenwasserstoffen (FCKW), dadurch gekennzeichnet, daß man
a) die Halone oder deren Gemische mit FKW oder FCKW in Gegenwart einer Wasserstoffquelle thermisch oder photochemisch spaltet
b) das in Schritt a) entstandene und HF und HBr enthaltende Gas auf 5 - 50°C abkühlt und mit mindestens 1 Mol Cl₂ pro Mol HBr umsetzt
c) aus dem in Schritt b) entstandenen und HF, HCl, Br₂ und überschüssiges Cl₂ enthaltenden Gas das HF in einer Absorptionskolonne mit Wasser oder Salzsäure auswäscht, wobei am Sumpf der Kolonne Fluorwasserstoffsäure und am Kopf der Kolonne ein weitgehend HF-freies, HCl, Br₂ und Cl₂ enthaltendes Gas erhalten wird
d) die in Schritt c) entstandene Fluorwasserstoffsäure in einer Stripkolonne mit komprimierter Luft oder Dampf von mitgeführtem Brom befreit und dann am Sumpf der Kolonne abführt, während man Brom im Gemisch mit Luft oder Dampf am Kolonnenkopf abzieht
e) aus dem in Schritt c) entstandenen weitgehend HF-freien Gas das darin enthaltene HCl in einer Absorptionskolonne mit Wasser auswäscht, wobei am Sumpf der Kolonne Salzsäure und am Kopf der Kolonne ein weitgehend HCl-freies, Br₂ und Cl₂ enthaltendes Gas erhalten wird
f) die in Schritt e) entstandene Salzsäure in einer Stripkolonne mit komprimierter Luft oder Dampf von mitgeführtem Brom befreit und dann die Salzsäure am Sumpf der Kolonne abführt, während man Brom im Gemisch mit Luft oder Dampf am Kolonnenkopf abzieht
g') die in den Schritten d) - f) am jeweiligen Kolonnenkopf abgezogenen, Brom oder Brom und Chlor enthaltenden Gase einer reduzierenden Wäsche unterwirft.

Die erfindungsgemäß entsorgten Halone (Fluorbromkohlenwasserstoffe oder Fluorchlorbromkohlenwasserstoffe) haben im allgemeinen 1 bis 3 C-Atome. Sie können vollständig oder teilweise halogeniert sein.

Die Halone können einzeln oder miteinander gemischt vorliegen oder in Gemischen mit FKW oder FCKW oder beiden. Die FKW und FCKW haben im allgemeinen 1 bis 6 C-Atome und können vollständig oder teilweise halogeniert sein.

In Schritt a) wird als Wasserstoffquelle vorzugsweise Wasserstoff selbst oder ein Kohlenwasserstoff eingesetzt. Die thermische Spaltung wird vorzugsweise in einem Spaltreaktor vorgenommen wie er in EP-A-0 212 410 beschrieben ist.

In Schritt b) wird das in Schritt a) entstandene und HF und HBr enthaltende Gas auf 5-50°C, vorzugsweise 5-25°C abgekühlt und dann in einer Mischkammer mit mindestens 1 Mol Cl₂, vorzugsweise 1 bis 10 Mol Cl₂, insbesondere 1 bis 5 Mol Cl₂ pro Mol HBr umgesetzt.

In Schritt c) wird HF mit Wasser oder Salzsäure, vorzugsweise 30 %iger Salzsäure, ausgewaschen, wobei Fluorwasserstoffsäure (Flußsäure) entsteht. Vorzugsweise wird soviel Wasser bzw. Salzsäure zum Auswaschen verwendet, daß eine ca. 50 %ige Flußsäure entsteht.

Im Schritt e) wird HCl mit Wasser in einer Absorptionskolonne ausgewaschen, die vorzugsweise isotherm betrieben wird, wobei Salzsäure entsteht. Vorzugsweise wird soviel Wasser zum Auswaschen verwendet, daß eine ca. 30 %ige Salzsäure entsteht.

Die Stripkolonnen in den Schritten d) und f) können bei Unter-, Normal-oder Überdruck betrieben werden.

In Schritt g) werden die in den Schritten d)-f) an den Köpfen der jeweiligen Kolonnen erhaltenen Gase vorzugsweise auf einen Druck von 1 bis 10 bar, insbesondere 1 bis 6 bar komprimiert und dadurch teilweise verflüssigt. Dabei wird vorzugsweise eine Temperatur von 10 bis 60°C, insbesondere 15 bis 40°C eingestellt.

In Schritt h) wird Cl₂ am Kopf der Kolonne abgezogen; dieses wird vorzugsweise in Schritt b) zurückgeführt.

Die in Schritt i) bzw. g') verwendete reduzierende Wäsche, die zur Abgasreinigung dient, wird vorzugsweise mit SO₂/H₂O, wäßriger Bisulfit-Lösung, Ameisensäure oder wäßriger Natriumformiat-Lösung betrieben.

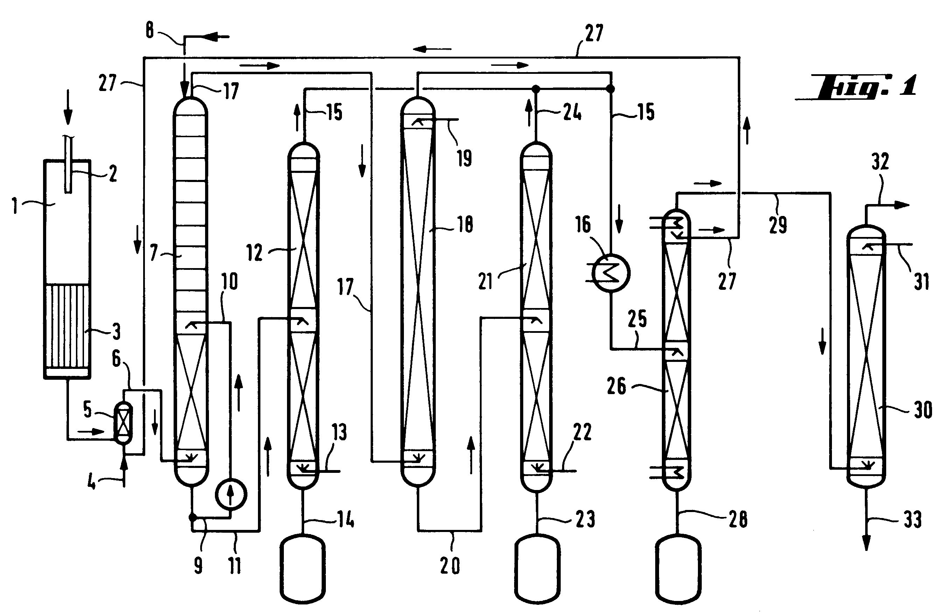

Die Erfindung soll durch das folgende Beispiel und Figur 1 näher erläutert werden.

### Beispiel

Die Spaltung gemäß Schritt a) wurde in einem ^{(R)}Diabon-Rohr (1) (Länge = 800 mm, Durchmesser: 48 mm) durchgeführt, das am oberen Ende mit einer Brennerdüse (2) mit elektrischer Zündeinrichtung versehen war. Es wurden 100 g/h halonhaltiges FCKW-Gemisch (40 Gew.-% Dichlordifluormethan R 12, 50 Gew.-% Trichlorfluormethan R 11, 10 Gew.-% Trifluorbrommethan R 13B1) mit Hilfe von Knallgas (35 l/h H₂, 10,5 l/h O₂) gespalten. An das untere Ende des Diabon-Rohrs (1) war ein Plattenwärmetauscher (3) (Länge= 400 mm) aus Diabon angesetzt, in dem die heißen Spaltgase auf Raumtemperatur abgekühlt und teilweise verflüssigt wurden. Hinter dem Wärmetauscher (3) wurde kontinuierlich Chlor über Leitung (4) zudosiert (1 l/h) und das Gemisch anschließend durch ein als Mischstrecke dienendes Nickelrohr (5) (Länge= 200 mm, Durchmesser= 20 mm) mit Nickeldrahtnetzen (Durchmesser= 4 mm) geleitet. Das Gemisch wurde dann über Leitung (6) in die HF-Absorptionskolonne (7) (Länge= 1500 mm, Durchmesser = 30 mm; PTFE-ausgekleidete Stahlkolonne mit seitlichem Zulaufstutzen und Kopfkühler sowie PP-Raschigringen mit 4 mm Durchmesser als Füllkörpern) geführt. Am Kolonnenkopf wurden kontinuierlich 300 ml/h 30 %ige Salzsäure über Leitung (8) eingespeist. Von der am unteren Ende von Kolonne (7) ablaufenden wäßrigen HF (ca. 200 ml/h) wurde ein Teilstrom (ca. 50 ml/h) über Leitung (9) abgezweigt und auf den seitlichen Zulaufstutzen (10) gepumpt. Der Hauptteil der noch Brom enthaltenden wäßrigen HF wurde über Leitung (11) in die HF-Stripkolonne (12) (Länge= 1500 mm, Durchmesser= 30 mm; PTFE-ausgekleidete Stahlkolonne mit seitlichem Zulaufstutzen und Kopfkühler sowie PP-Raschigringen mit 4 mm Durchmesser als Füllkörpern) geleitet, durch die ca. 0,6 m³/h Luft strömte, welche über Leitung (13) eingeleitet wurde. Die am Kolonnenboden über Leitung (14) ablaufende wäßrige HF hatte noch einen Restbromgehalt von 10 - 500 ppm. Die am Kopf von Kolonne (12) (auf ca. 20°C abgekühlt) abgehenden Gase wurden über Leitung (15) in den Kühler (16) geführt. Das am Kopf der HF-Absorptionskolonne (7) austretende Gasgemisch wurde über Leitung (17) in die bei Umgebungstemperatur betriebene HCl-Absorptionskolonne (18) (Länge= 1500 mm, Durchmesser= 30 mm; PTFE-ausgekleidete Stahlkolonne mit Kopfkühler und PP-Raschigringen mit 4 mm Durchmesser als Füllkörpern) geleitet, in die kontinuierlich über Leitung (19) 300 g/h Wasser eingespeist wurden. Am Kopf der Kolonne (18) abgehende Gase wurden in Leitung (15) geleitet und durch diese in den Kühler (16) geführt. Die noch Brom enthaltende wäßrige HCl wurde am Sumpf von Kolonne (18) entnommen und über Leitung (20) in die HCl-Stripkolonne (21) (Länge= 1500 mm, Durchmesser= 30 mm; PTFE-ausgekleidete Stahlkolonne mit seitlichem Zulaufstutzen und Kopfkühler sowie PP-Raschigringen mit 4 mm Durchmesser als Füllkörpern) geleitet, durch die ca. 0,6 m³/h Luft strömte, die durch Leitung (22) eingeleitet wurde. Die am Boden von Kolonne (21) über Leitung (23) ablaufende wäßrige HCl hatte noch einen Restbromgehalt von 5 - 100 ppm. Die am Kolonnenkopf (auf ca. 20°C gekühlt) über Leitung (24) abgehenden Gase wurden über Leitung (24) und (15) in den Kühler (16) geführt. Dort wurden die ankommenden Gase auf 5 - 10°C abgekühlt und anschließend über Leitung (25) in die Kolonne (26) (Länge= 2000 mm, Durchmesser= 30 mm; Glaskolonne mit seitlichem Zulaufstutzen und Kopfkühler sowie Raschigringen mit 4 mm Durchmesser als Füllkörpern), geleitet. Am gekühlten Kolonnenkopf wurde Chlor über Leitung (27) flüssig abgenommen (-78°C) und wieder zur Mischstrecke (5) zurückgeführt. Am Boden von Kolonne (26) sammelte sich das elementare Brom und wurde über Leitung (28) abgezogen. Das nichtkondensierbare Abgas wurde über Leitung (29) in die Bisulfit-Wäsche (30) geleitet (Länge= 2000 mm, Durchmesser= 30 mm, Glaskolonne mit Kopfkühler und Raschigringen mit 4 mm Durchmesser als Füllkörpern) in die kontinuierlich über Leitung (31) 500 ml/h 20 %ige Bisulfitlösung dosiert wurde. Im Abgas der Wäsche (30), das über Leitung (32) abging, ließen sich Halogene nur noch in Spuren nachweisen (insgesamt weniger als 5 ppm). Über Leitung (33) wurde das Abwasser der Wäsche (30) abgezogen, welches das durch Reduktion von restlichem Brom und Chlor entstandene Bromid und Chlorid enthielt.

## Patentansprüche

1. Verfahren zur Entsorgung von Halonen (Fluorbromkohlenwasserstoffen oder Fluorchlorbromkohlenwasserstoffen) oder deren Gemischen mit Fluorkohlenwasserstoffen (FKW) oder Fluorchlorkohlenwasserstoffen (FCKW), dadurch gekennzeichnet, daß man
a) die Halone oder deren Gemische mit FKW oder FCKW in Gegenwart einer Wasserstoffquelle thermisch oder photochemisch spaltet
b) das in Schritt a) entstandene und HF und HBr enthaltende Gas auf 5 - 50°C abkühlt und mit mindestens 1 Mol Cl₂ pro Mol HBr umsetzt
c) aus dem in Schritt b) entstandenen und HF, HCl, Br₂ und überschüssiges Cl₂ enthaltenden Gas das HF in einer Absorptionskolonne mit Wasser oder Salzsäure auswäscht, wobei am Sumpf der Kolonne Fluorwasserstoffsäure und am Kopf der Kolonne ein weitgehend HF-freies, HCl, Br₂ und Cl₂ enthaltendes Gas erhalten wird
d) die in Schritt c) entstandene Fluorwasserstoffsäure in einer Stripkolonne mit komprimierter Luft oder Dampf von mitgeführtem Brom befreit und dann am Sumpf der Kolonne abführt, während man Brom im Gemisch mit Luft oder Dampf am Kolonnenkopf abzieht
e) aus dem in Schritt c) entstandenen weitgehend HF-freien Gas das darin enthaltene HCl in einer Absorptionskolonne mit Wasser auswäscht, wobei am Sumpf der Kolonne Salzsäure und am Kopf der Kolonne ein weitgehend HCl-freies, Br₂ und Cl₂ enthaltendes Gas erhalten wird
f) die in Schritt e) entstandene Salzsäure in einer Stripkolonne mit komprimierter Luft oder Dampf von mitgeführtem Brom befreit und dann die Salzsäure am Sumpf der Kolonne abführt, während man Brom im Gemisch mit Luft oder Dampf am Kolonnenkopf abzieht
g) die in den Schritten d) -f) am jeweiligen Kolonnenkopf abgezogenen, Brom oder Brom und Chlor enthaltenden Gase gemeinsam komprimiert und dadurch teilweise kondensiert
h) das in Schritt g) entstandene kondensierte Br₂/Cl₂-Gemisch in einer Kolonne destilliert, wobei das Cl₂ am Kopf der Kolonne und das Br₂ am Sumpf der Kolonne abgezogen wird
i) den in Schritt g) nicht kondensierten Teil der Gase, der restliches Brom und Chlor enthält, einer reduzierenden Wäsche unterwirft.

2. Verfahren zur Entsorgung von Halonen (Fluorbromkohlenwasserstoffen oder Fluorchlorbromkohlenwasserstoffen) oder deren Gemischen mit Fluorkohlenwasserstoffen oder Fluorchlorkohlenwasserstoffen (FCKW), dadurch gekennzeichnet, daß man
a) die Halone oder deren Gemische mit FKW oder FCKW in Gegenwart einer Wasserstoffquelle thermisch oder photochemisch spaltet
b) das in Schritt a) entstandene und HF und HBr enthaltende Gas auf 5 - 50°C abkühlt und mit mindestens 1 Mol Cl₂ pro Mol HBr umsetzt
c) aus dem in Schritt b) entstandenen und HF, HCl, Br₂ und überschüssiges Cl₂ enthaltenden Gas das HF in einer Absorptionskolonne mit Wasser oder Salzsäure auswäscht, wobei am Sumpf der Kolonne Fluorwasserstoffsäure und am Kopf der Kolonne ein weitgehend HF-freies, HCl, Br₂ und Cl₂ enthaltendes Gas erhalten wird
d) die in Schritt c) entstandene Fluorwasserstoffsäure in einer Stripkolonne mit komprimierter Luft oder Dampf von mitgeführtem Brom befreit und dann am Sumpf der Kolonne abführt, während man Brom im Gemisch mit Luft oder Dampf am Kolonnenkopf abzieht
e) aus dem in Schritt c) entstandenen weitgehend HF-freien Gas das darin enthaltene HCl in einer Absorptionskolonne mit Wasser auswäscht, wobei am Sumpf der Kolonne Salzsäure und am Kopf der Kolonne ein weitgehend HCl-freies, Br₂ und Cl₂ enthaltendes Gas erhalten wird
f) die in Schritt e) entstandene Salzsäure in einer Stripkolonne mit komprimierter Luft oder Dampf von mitgeführtem Brom befreit und dann die Salzsäure am Sumpf der Kolonne abführt, während man Brom im Gemisch mit Luft oder Dampf am Kolonnenkopf abzieht
g') die in den Schritten d) -f) am jeweiligen Kolonnenkopf abgezogenen, Brom oder Brom und Chlor enthaltenden Gase einer reduzierenden Wäsche unterwirft.

3. Verfahren nach Anspruch 1 oder 2, dadurch gekennzeichnet, daß die Halone 1 bis 3 C-Atome haben.

4. Verfahren nach Anspruch 1 oder 2, dadurch gekennzeichnet, daß die FKW und FCKW 1 bis 6 C-Atome haben.

5. Verfahren nach einem der Ansprüche 1 bis 4, dadurch gekennzeichnet, daß man in Schritt a) 1 bis 5 Mol Cl₂ pro Mol HBr einsetzt.

## Claims

1. A process for disposing of halons (bromofluorocarbons or bromochlorofluorocarbons) or mixtures thereof with fluorocarbons (FCs) or chlorofluorocarbons (CFCs), which comprises
a) thermally or photochemically cleaving the halons or mixtures thereof with FCs or CFCs in the presence of a hydrogen source
b) cooling the HF- and HBr-containing gas formed in step a) to 5-50°C and reacting it with at least 1 mol of Cl₂ per mole of HBr
c) scrubbing the HF from the gas formed in step b), which contains HF, HCl, Br₂ and excess Cl₂, in an absorption column using water or hydrochloric acid, hydrofluoric acid being obtained at the bottom of the column and a substantially HF-free, HCl-, Br₂- and Cl₂-containing gas being obtained at the head of the column
d) freeing the hydrofluoric acid formed in step c) from entrained bromine in a stripping column using compressed air or steam and then discharging the hydrofluoric acid at the bottom of the column, while withdrawing bromine at the column head in a mixture with air or steam
e) scrubbing the HCl contained therein from the substantially HF-free gas, formed in step c), in an absorption column using water, hydrochloric acid being obtained at the bottom of the column and a substantially HCl-free, Br₂- and Cl₂-containing gas being obtained at the head of the column
f) freeing the hydrochloric acid formed in step e) from entrained bromine in a stripping column using compressed air or steam and then discharging the hydrochloric acid at the bottom of the column, while withdrawing bromine at the column head in a mixture with air or steam
g) jointly compressing the bromine- or bromine- and chlorine-containing gases withdrawn at the respective column head in steps d) - f) and, as a result, partially condensing them
h) distilling in a column the condensed Br₂/Cl₂ mixture formed in step g), the Cl₂ being withdrawn at the head of the column and the Br₂ being withdrawn at the bottom of the column
i) subjecting the fraction of the gases not condensed in step g), which contains residual bromine and chlorine, to reduction scrubbing.

2. A process for disposing of halons (bromofluorocarbons or bromochlorofluorocarbons) or mixtures thereof with fluorocarbons or chlorofluorocarbons (CFCs), which comprises
a) thermally or photochemically cleaving the halons or mixtures thereof with FCs or CFCs in the presence of a hydrogen source
b) cooling the HF- and HBr-containing gas formed in step a) to 5-50°C and reacting it with at least 1 mol of Cl₂ per mole of HBr
c) scrubbing the HF from the gas formed in step b), which contains HF, HCl, Br₂ and excess Cl₂, in an absorption column using water or hydrochloric acid, hydrofluoric acid being obtained at the bottom of the column and a substantially HF-free, HCl-, Br₂- and Cl₂-containing gas being obtained at the head of the column
d) freeing the hydrofluoric acid formed in step c) from entrained bromine in a stripping column using compressed air or steam and then discharging the hydrofluoric acid at the bottom of the column, while withdrawing bromine at the column head in a mixture with air or steam
e) scrubbing the HCl contained therein from the substantially HF-free gas, formed in step c), in an absorption column using water, hydrochloric acid being obtained at the bottom of the column and a substantially HCl-free, Br₂- and Cl₂-containing gas being obtained at the head of the column
f) freeing the hydrochloric acid formed in step e) from entrained bromine in a stripping column using compressed air or steam and then discharging the hydrochloric acid at the bottom of the column, while withdrawing bromine at the column head in a mixture with air or steam
g') subjecting the bromine- or bromine- and chlorine-containing gases withdrawn at the respective column head in steps d) - f) to reduction scrubbing.

3. The process as claimed in claim 1 or 2, wherein the halons have 1 to 3 carbon atoms.

4. The process as claimed in claim 1 or 2, wherein the FCs and CFCs have 1 to 6 carbon atoms.

5. The process as claimed in one of claims 1 to 4, wherein, in step a), 1 to 5 mol of Cl₂ are used per mole of HBr.

## Revendications

1. Procédé pour l'élimination des halones (hydrocarbures fluorobromés ou hydrocarbures fluorochlorobromés) ou de leurs mélanges avec des hydrocarbures fluorés (HCF) ou des hydrocarbures fluorochlorés (HCFC) caractérisé en ce que :
(a) on craque par voie thermique ou photochimique les halones ou leurs mélanges avec les HCF ou les HCFC en présence d'une source d'hydrogène,
(b) on refroidit à une température de 5 à 50°C le gaz formé à l'étape (a) qui contient HF et HBr, et on fait réagir avec au moins 1 mole de Cl₂ par mole de HBr,
(c) à partir du gaz formé à l'étape (b) qui contient HF, HCl, Br₂ et l'excès en Cl₂, on extrait HF par lavage dans une colonne d'absorption avec de l'eau ou avec de l'acide chlorhydrique, en obtenant au fond de la colonne l'acide fluorhydrique et à la tête de la colonne un gaz contenant HCl, Br₂ ou Cl₂, essentiellement exempt de HF,
(d) on débarrasse dans une colonne de stripping l'acide fluorhydrique formé à l'étape (c) du brome entraîné utilisant de l'air comprimé ou de la vapeur d'eau et ensuite, on évacue l'acide chlorhydrique par le fond de la colonne, alors qu'on soutire le brome en mélange avec de l'air ou de la vapeur d'eau à la tête de la colonne,
(e) on épuise dans une colonne d'absorption par lavage avec de l'eau HCl contenu dans le gaz formé à l'étape (c) essentiellement exempt de HF, en obtenant au fond de la colonne l'acide chlorhydrique et à la tête de la colonne un gaz contenant Br₂ et Cl₂, essentiellement exempt de HCl,
(f) on débarrasse dans une colonne de stripping l'acide chlorhydrique formé à l'étape (e) du brome entraîné utilisant de l'air comprimé ou de la vapeur d'eau et ensuite on évacue l'acide chlorhydrique par le fond de la colonne, alors qu'on soutire le brome en mélange avec de l'air ou de la vapeur d'eau à la tête de la colonne
(g) on comprime conjointement les gaz contenant le brome ou le brome et le chlore soutirés à la tête de la colonne dans les étapes respectives (d) à (f), et ainsi on les condense en partie,
(h) on distille dans une colonne le mélange condensé de Br₂/Cl₂ formé à l'étape (g), en soutirant Cl₂ à la tête de la colonne et Br₂ par le fond de la colonne,
(i) on traite la partie non condensée des gaz à l'étape (g) qui contiennent le brome et le chlore résiduels par un lavage réducteur.

2. Procédé pour l'élimination des halones (hydrocarbures fluorobromés ou hydrocarbures fluorochlorobromés) ou de leurs mélanges avec des hydrocarbures fluorés ou des hydrocarbures fluorochlorés (HCFC), caractérisé en ce que :
(a) on craque par voie thermique ou photochimique les halones ou leurs mélanges avec des HCF ou des HCFC en présence d'une source d'hydrogène,
(b) on refroidit à une température de 5 à 50°C les gaz formés à l'étape (a) contenant HF et HBr et on fait réagir avec au moins 1 mole de Cl₂ par mol de HBr,
(c) on épuise dans une colonne d'absorption HF à partir du gaz formé à l'étape (b) contenant HF, HCl, Br₂ et un excès en Cl₂ par lavage avec de l'eau ou avec de l'acide chlorhydrique, en obtenant au fond de la colonne l'acide fluorhydrique et à la tête de la colonne un gaz contenant HCl, Br₂ ou Cl₂, essentiellement exempt de HF,
(d) on débarrasse l'acide fluorhydrique formé à l'étape (c) dans une colonne de stripping du brome entraîné utilisant de l'air comprimé ou de la vapeur d'eau et ensuite on évacue l'acide fluorhydrique par le fond de la colonne, en soutirant à la tête de la colonne le brome en mélange avec l'air ou la vapeur d'eau,
(e) on épuise par lavage HCl contenu dans le gaz formé à l'étape (c) essentiellement exempt de HF, dans une colonne d'absorption en utilisant de l'eau, en obtenant l'acide chlorhydrique au fond de la colonne et en soutirant un gaz contenant Br₂ et Cl₂, essentiellement exempt de HCl, à la tête de la colonne
(f) on débarrasse l'acide chlorhydrique formé à l'étape (e) dans une colonne de stripping du brome entraîné en utilisant de l'air comprimé ou de la vapeur d'eau et ensuite on évacue l'acide chlorhydrique par le fond de la colonne, en soutirant le brome en mélange avec de l'air ou de la vapeur d'eau à la tête de la colonne,
(g) on traite les gaz contenant le brome ou le brome et le chlore soutirés à la tête de la colonne dans les étapes respectives (d) à (f) par un lavage réducteur.

3. Procédé selon la revendication 1 ou 2, caractérisé en ce que les halones comportent de 1 à 3 atomes de carbone.

4. Procédé selon la revendication 1 ou 2, caractérisé en ce que les HCF ou les HCFC comportent de 1 à 6 atomes de carbone.

5. Procédé selon la revendication 1 ou 4, caractérisé en ce qu'on utilise à l'étape (a) de 1 à 5 moles de Cl₂ par mole de HBr.
